# EUROPEAN PATENT SPECIFICATION

(11) **EP 3 081 385 B1**
(45) Date of publication and mention of the grant of the patent: **21.06.2017**
(21) Application number: 15181654.3
(22) Date of filing: 20.08.2015
(51) Int. Cl.: B41M 5/42

(54) **PHOTOGRAPHIC PAPER WITH PERFUME FOR THERMAL SUBLIMATION PRINTER AND METHOD OF MANUFACTURING THE SAME**
FOTOGRAFISCHES PAPIER MIT PARFÜM FÜR THERMISCHE SUBLIMATIONSDRUCKER UND VERFAHREN ZUR HERSTELLUNG DAVON
PAPIER PHOTOGRAPHIQUE À PARFUM POUR IMPRESSION PAR SUBLIMATION THERMIQUE ET SON PROCÉDÉ DE FABRICATION

(30) Priority: 16.04.2015 TW 104112265
(43) Date of publication of application: 19.10.2016
(73) Proprietor: Chien Hwa Coating Technology, Inc., Hsinchu 300 (TW)
(72) Inventor: HSIEH, Hua-Yu, 300 Hsinchu (TW); LIN, Yi-Shan, 300 Hsinchu (TW); TANG, Tzu-Chin, 300 Hsinchu (TW)
(74) Representative: Ström & Gulliksson AB

(56) References cited:
- JP-A- H0 725 172
- JP-A- S63 209 879
- JP-A- 2002 187 368

## Description

### BACKGROUND

### Field of Invention

The present invention relates to a photographic paper with perfume for a thermal sublimation printer and a method of manufacturing the same.

### Description of Related Art

Currently, a commercial photo-printing machine mainly utilizes inkjet or thermal sublimation technology. The inkjet printing is a common output mode due to convenience, but the quality has been criticized. It still appears dots and color patches in the latest inkjet technology. In addition, six or more colors inkjet technology is required to print a photo with high quality, but the inks and the photographic paper are expensive and the print speed is quite slow; especially, the higher the resolution, the slower the printing speed. Further, fading, yellowing and blurring of image of the photographic paper may occur in wet weather.

The thermal sublimation printing is heat sensing printing technology. During printing, yellow, magenta and cyan color films are respectively heated to vaporize dyes and then imprint on a dedicated photographic paper, which can reach 256 levels per color and about 16.77 million continuous color tones. Finally, a protective layer may be printed on the photographic paper to exhibit waterproof, anti-UV and anti-fingerprint properties.

Digital printing may also be employed to avoid occurrence of fading, yellowing and blurring of image of the photographic paper. However, after digital printing, the photographic paper has strong flavor from syrup. Therefore, under the considerations of retention time and smell of the photographic paper, the thermal sublimation printing technology is preferred.

In JP 2002 187368, a thermal transfer image receiving sheet comprising a plurality of constituting parts, each containing at least an acceptive layer and a base, and a perfume component-containing print layer containing a perfume component on the acceptive layer, is disclosed.

### SUMMARY

The purpose of the present disclosure is to provide a photographic paper with perfume for a thermal sublimation printer to not only provide fragrance during or after printing but also spread the fragrance with several months, and thus to let an owner feel good.

The present disclosure provides a photographic paper with perfume for a thermal sublimation printer, which includes a first substrate, a second substrate, a perfume-containing adhesive layer and a dye-receiving layer. The second substrate is over the first substrate. The perfume-containing adhesive layer is interposed between the first and second substrates. The dye-receiving layer is over the second substrate. Further, the photographic paper further comprises a reflective layer interposed between the second substrate and the dye-receiving layer.

The present disclosure further provides a method of manufacturing a photographic paper with perfume for a thermal sublimation printer, which includes: providing a first substrate; providing a second substrate beneath the first substrate, the second substrate having an upper surface and a lower surface opposite to each other; forming a perfume-containing adhesive layer in contact with the lower surface of the second substrate to form a first stacked structure; adhering the first stacked structure to the first substrate, such that the perfume-containing adhesive layer is between the first substrate and the second substrate; and forming a dye-receiving layer over the upper surface of the second substrate. The method further comprises forming a reflective layer over the second substrate before forming the dye-receiving layer over the upper surface of the second substrate.

### BRIEF DESCRIPTION OF THE DRAWINGS

The present disclosure can be more fully understood by reading the following detailed description of the embodiment, with reference made to the accompanying drawings as follows:
Fig. 1 is a cross-sectional view of a photographic paper with perfume according to some embodiments of the present disclosure.
Fig. 2 is a cross-sectional view of a photographic paper with perfume according to some embodiments of the present disclosure.
Fig. 3 is a cross-sectional view of a photographic paper with perfume according to some embodiments of the present disclosure.
Figs. 4A-4D are cross-sectional views at various stages of manufacturing of a photographic paper with perfume according to some embodiments of the present disclosure.
Figs. 5A-5D are cross-sectional views at various stages of manufacturing of a photographic paper with perfume according to some embodiments of the present disclosure.

### DETAILED DESCRIPTION

Reference will now be made in detail to embodiments illustrated in the accompanying drawings. Wherever possible, the same reference numbers are used in the drawings and the description to refer to the same or like parts. In the drawings, the shape and thickness may be exaggerated for clarity and convenience. This description will be directed in particular to elements forming part of, or cooperating more directly with, methods and apparatus in accordance with the present disclosure. It is to be understood that elements not specifically shown or described may take various forms well known to those skilled in the art. Many alternatives and modifications will be apparent to those skilled in the art, once informed by the present disclosure.

Further, spatially relative terms, such as "beneath," "below," "lower," "above," "upper" and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. The apparatus may be otherwise oriented (rotated 90 degrees or at other orientations) and the spatially relative descriptors used herein may likewise be interpreted accordingly.

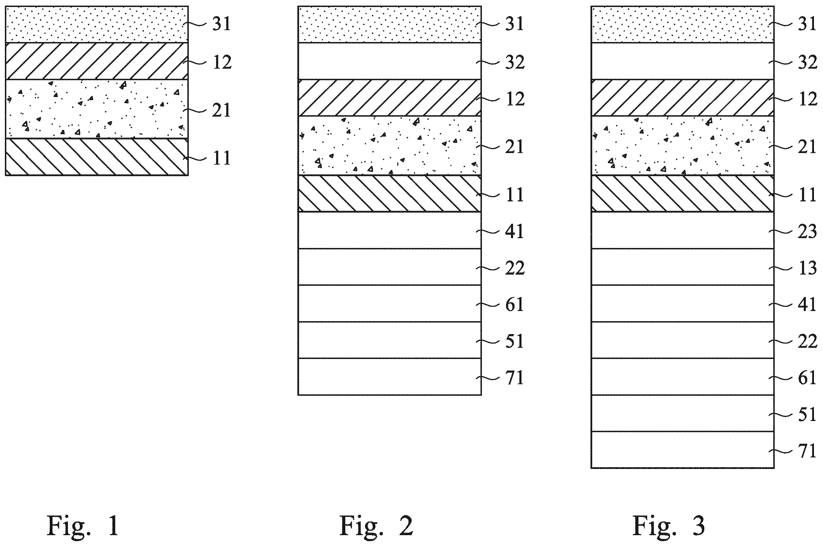

Fig. 1 is a cross-sectional view of a photographic paper with perfume according to some embodiments of the present disclosure. Referring to Fig. 1, in the embodiments, the photographic paper with the perfume includes a first substrate 11, a second substrate 12, a perfume-containing adhesive layer 21 and a dye-receiving layer (DRL) 31.

In some embodiments, the first substrate 11 is paper, synthesized Mylar, biaxial oriented polypropylene (BOPP), polyethylene terephthalate (PET) or a combination thereof. In some embodiments, the synthesized Mylar includes biaxial oriented polypropylene and polyethylene terephthalate. In some embodiments, the first substrate 11 is transparent polyethylene terephthalate.

The second substrate 12 is disposed over the first substrate 11. Heat will reach the dye-receiving layer 31 and then reach the second substrate 12 during printing. Therefore, the second substrate 12 should have sufficient heat resistance, such that will not deformed after receiving heat. Given the above, in some embodiments, the second substrate 12 is paper, synthesized Mylar, biaxial oriented polypropylene, polyethylene terephthalate or a combination thereof. In some embodiments, the second substrate 12 is white. In some embodiments, the second substrate 12 is white synthesized Mylar. In some embodiments, the second substrate 12 is white biaxial oriented polypropylene. In some embodiments, the second substrate 12 is white polyethylene terephthalate.

The perfume-containing adhesive layer 21 is interposed between the first substrate 11 and the second substrate 12. The perfume-containing adhesive layer 21 includes perfume and adhesive. In some embodiments, the perfume includes perfume with floral flavor, perfume with fruity flavor, perfume with woody flavor or a combination thereof. In some embodiments, the adhesive includes pressure sensitive adhesive (e.g., acrylic adhesive), polyurethane, polyvinyl alcohol, epoxy, acrylate copolymer,
thermoplastic polyurethane, chlorinated polypropylene, vinyl acetate or a combination thereof.

In some embodiments, an amount of the perfume of the perfume-containing adhesive layer 21 is greater than or equal to 2 wt% based on the weight of the perfume-containing adhesive layer 21. In some embodiments, an amount of the perfume of the perfume-containing adhesive layer 21 is lower than or equal to 6 wt% based on the weight of the perfume-containing adhesive layer 21.

It is noteworthy that, typical paper with perfume is fabricated by directly spraying perfume on the paper, and the perfume is absorbed into the pores of paper fibers. However, the perfume of such paper with the perfume will be rapidly spread in an ambient temperature, which results in short duration of fragrance, and the paper then fails to spread fragrance. In addition, the high spreading amount of the perfume with short period will lead to olfactory fatigue of the owner. However, upper and lower surfaces of the perfume-containing adhesive layer 21 of the present disclosure are respectively covered by the second substrate 12 and the first substrate 11, and thus fragrance can only be spread from sides of the perfume-containing adhesive layer 21. Therefore, the perfume may be effectively retained in the perfume-containing adhesive layer 21 and slowly released over time to achieve long release effect. In some specific embodiments, the photographic paper with the perfume after printing and storage for three months still retains significant fragrance.

In some embodiments, at least one of the first substrate 11 and the second substrate 12 is paper to help spread fragrance. Specifically, paper fibers can absorb the perfume, and thus the perfume can be spread from not only sides of the perfume-containing adhesive layer 21 but also sides of the paper to slightly increase spreading rate.

The dye-receiving layer 31 is disposed over the second substrate 12. When a thermal sublimation printer (not shown) is used, a thermal printing head (TPH) heats ribbon to let dyes on the ribbon vaporize and then form dye molecules. The dye molecules are then received by the dye-receiving layer 31 to form patterns. In particular, when the thermal printing head heats the ribbon, heat will penetrate the dye-receiving layer 31 and the second substrate 12 and then reach the perfume-containing adhesive layer 21. The perfume of the perfume-containing adhesive layer 21 triggered by the heat will significantly spread, and thus the owner can smell obvious fragrance when receiving the photographic paper after printing. It is noted that, in order to let the heat effectively penetrate the second substrate 12 and then reach the perfume-containing adhesive layer 21, thermal resistance of the
second substrate 12 cannot be too large, and thus the second substrate 12 with sufficient low thermal resistance is used. In some embodiments, the thermal resistance of the second substrate 12 is lower than or equal to that of the polyethylene terephthalate.

Fig. 2 is a cross-sectional view of a photographic paper with perfume according to some embodiments of the present disclosure. The difference between Fig. 1 and Fig. 2 is that in the embodiments, the photographic paper with the perfume further includes a reflective layer 32 interposed between the second substrate 12 and the dye-receiving layer 31. The reflective layer 32 is configured to whiten the photographic paper. In some embodiments, the reflective layer 32 includes metal oxide particles and resin. The metal oxide particles may be titanium dioxide, calcium carbonate, magnesium carbonate, barium sulfate, silicon dioxide, china clay, talc or a combination thereof. The resin may be pressure sensitive adhesive (e.g., acrylic adhesive), polyurethane, polyvinyl alcohol, epoxy, acrylate copolymer,
thermoplastic polyurethane, chlorinated polypropylene, vinyl acetate or a combination thereof.

In some embodiments, the photographic paper with the perfume further includes a laminate 41 disposed beneath the first substrate 11. The laminate 41 is configured to increase overall thickness of the photographic paper. In some embodiments, the laminate 41 includes polymer material, such as polyethylene, thermoplastic polyurethane, polylactic acid (or polylactide (PLA)), polypropylene, polycarbonate (PC) or poly(methyl methacrylate).

In some embodiments, the photographic paper with the perfume further includes a supporting layer 51 disposed beneath the laminate 41. The supporting layer 51 is configured to increase the support (or called as hardness) of the photographic paper to avoid collapse. In some embodiments, the supporting layer 51 includes transparent/opaque polyethylene terephthalate.

In some embodiments, the photographic paper with the perfume further includes a first adhesive layer 22 disposed between the laminate 41 and the supporting film 51 and in contact with the laminate 41. In some embodiments, the first adhesive layer 22 includes pressure sensitive adhesive (e.g., acrylic adhesive), polyurethane, polyvinyl alcohol, epoxy, acrylate copolymer, thermoplastic polyurethane, chlorinated polypropylene, vinyl acetate or a combination thereof.

In some embodiments, the photographic paper with the perfume further includes a label layer 61 disposed between the laminate 41 and the supporting layer 51 and in contact with the supporting layer 51. The label layer 61 may be patterns, such as photographic paper manufacturing company's name or trademarks.

In some embodiments, the photographic paper with the perfume further includes a writable layer 71 disposed beneath the supporting layer 51. The owner can write on the writable layer 71.

Fig. 3 is a cross-sectional view of a photographic paper with perfume according to some embodiments of the present disclosure. The difference between Fig. 2 and Fig. 3 is that in the embodiments, the photographic paper with the perfume further includes a second adhesive layer 23 disposed between the first substrate 11 and the laminate 41 and in contact with the first substrate 11. In some embodiments, the second adhesive layer 23 includes pressure sensitive adhesive (e.g., acrylic adhesive), polyurethane, polyvinyl alcohol, epoxy, acrylate copolymer,
thermoplastic polyurethane, chlorinated polypropylene, vinyl acetate or a combination thereof.

In some embodiments, the photographic paper with the perfume further includes a third substrate 13 disposed between the first substrate 11 and the laminate 41 and in contact with the laminate 41. The third substrate 13
is configured to provide a feeling of paper and pores of paper fibers for diffusing fragrance. In some embodiments, the third substrate 13 is paper, synthesized Mylar, biaxial oriented polypropylene, polyethylene terephthalate or a combination thereof.

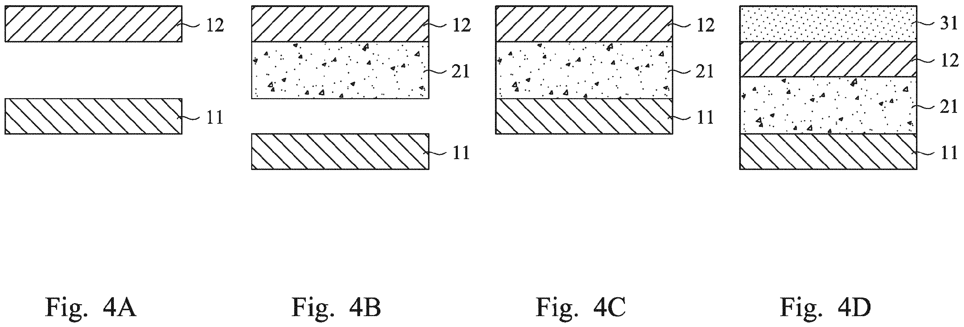

Figs. 4A-4D are cross-sectional views at various stages of manufacturing of a photographic paper with perfume according to some embodiments of the present disclosure. Referring to Fig. 4A, a first substrate 11 and a second substrate 12 are firstly provided. The second substrate 12 is disposed over the first substrate 11. The second substrate 12 has an upper surface (not marked) and a lower surface (not marked) opposite to each other.

Subsequently, a perfume-containing adhesive layer 21 is
formed in contact with the lower surface of the second substrate 12 to form a first stacked structure, as shown in Fig. 4B. The method of forming the perfume-containing adhesive layer 21 may be coating, printing (e.g., gravure printing), lamination or other suitable processes. In some embodiments, the perfume-containing adhesive layer 21 includes perfume, adhesive and solvent. In some embodiments, the perfume-containing adhesive layer 21 has a
solid content in a range of 10% to 30%. In some embodiments, a ratio of the weight of the perfume to the weight of the perfume-containing adhesive layer 21 is greater than or equal to 500 ppm, even greater than or equal to 1,000 ppm. The concentration of the perfume may be appropriately increased to increase the duration of fragrance. In particular, the perfume-containing adhesive layer 21 is covered by the second substrate 12 and the first substrate 11, and thus it will not induce olfactory fatigue of the owner due to the high concentration of the perfume.

After the perfume-containing adhesive layer 21 is formed, the first stacked structure is adhered to the first substrate 11, and the perfume-containing adhesive layer 21 is between the first substrate 11 and the second substrate 12, as shown in Figs. 4B-4C. In some embodiments, a temperature of the lamination process is in a range of 50 °C to 70 °C. Therefore, the lamination process may induce volatilization of the perfume of the perfume-containing adhesive layer 21.

Finally, a dye-receiving layer 31 is formed over the upper surface of the second substrate 12, as shown in Fig. 4D. For instance, the dye-receiving layer 31 may be formed by coating, printing (e.g., gravure printing), lamination or other suitable processes.

The skilled in the art may understands that the embodiments may be appropriately altered to form the structure of Fig. 4D according to the embodiments exemplified above. For example, the perfume-containing adhesive layer 21 may be formed over the first substrate 11, and then adhered to the second substrate 12, and the dye-receiving layer 31 is then formed over the upper surface of the second substrate 12.

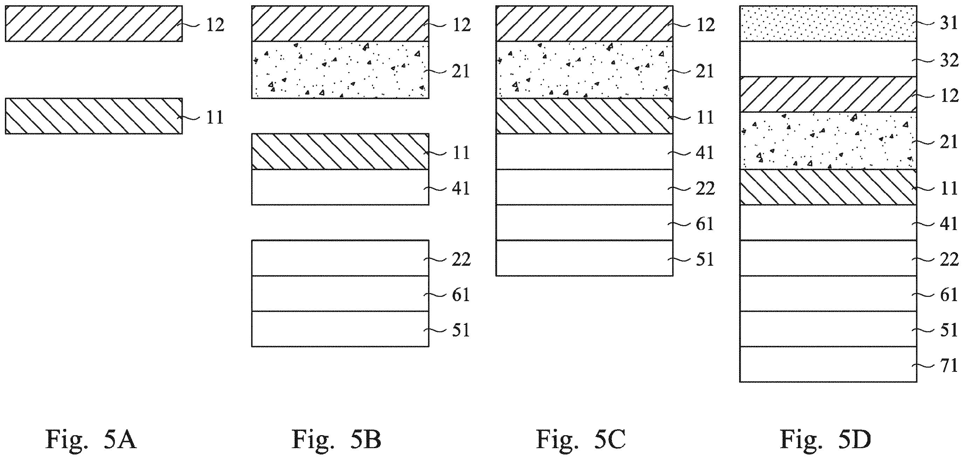

Figs. 5A-5D are cross-sectional views at various stages of manufacturing of a photographic paper with perfume according to some embodiments of the present disclosure. Referring to Fig. 5A, a first substrate 11 and a second substrate 12 are firstly provided. The second substrate 12 is disposed over the first substrate 11. The second substrate 12 has an upper surface and a lower surface opposite to each other.

Subsequently, a perfume-containing adhesive layer 21 is formed in contact with the lower surface of the second substrate 12 to form a first stacked structure, as shown in Fig. 5B. In some embodiments, a laminate 41 is formed beneath the first substrate 11 to form a second stacked structure after providing the first substrate 11, as shown in Fig. 5B. The laminate 41 may be formed using coating, printing (e.g., gravure printing), lamination or other suitable processes.

In some embodiments, a third stacked structure is provided, which includes a supporting layer 51 and a first adhesive layer 22 disposed over the supporting layer 51, as shown in Fig. 5B. The first adhesive layer 22 may be formed over the supporting layer 51 by coating, printing (e.g., gravure printing), lamination or other suitable processes. In some embodiments, the third stacked structure further includes a label layer 61 disposed between the supporting layer 51 and the first adhesive layer 22. The label layer 61 may be formed using coating, printing (e.g., gravure printing), lamination or other suitable processes.

After the perfume-containing adhesive layer 21 is formed, the first stacked structure (constituted by the perfume-containing adhesive layer 21 and the second substrate 12) is adhered to the first substrate 11, such that the perfume-containing adhesive layer 21 is between the first substrate 11 and the second substrate 12, as shown in Figs. 5B-5C.

In some embodiments, as shown in Figs. 5B-5C, before or after adhering the first stacked structure (constituted by the perfume-containing adhesive layer 21 and the second substrate 12) to the first substrate 11, the third stacked structure (including the supporting layer 51 and the first adhesive layer 22) is adhered to the laminate 41 of the second stacked structure (constituted by the first substrate 11 and the laminate 41), such that the first adhesive layer 22 is disposed between the laminate 41 and the supporting layer 51.

After the structure of Fig. 5C is formed, a dye-receiving layer 31 is formed over the upper surface of the second substrate 12, as shown in Fig. 5D. In some embodiments, a reflective layer 32 is formed over the second substrate 12 before forming the dye-receiving layer 31 over the upper surface of the second substrate 12. The reflective layer 32 is formed using coating, printing (e.g., gravure printing), lamination or other suitable processes. In some embodiments, a writable layer 71 is formed beneath the supporting layer 51 of the third stacked structure (including the supporting layer 51 and the first adhesive layer 22).

## Claims

1. A photographic paper with perfume for a thermal sublimation printer, comprising:
a first substrate (11);
a second substrate (12) over the first substrate (11);
a perfume-containing adhesive layer (21) interposed between the first substrate (11) and the second substrate (12); and
a dye-receiving layer (31) over the second substrate (12);
**characterized in that** the photographic paper further comprises a reflective layer (32) interposed between the second substrate (12) and the dye-receiving layer (31).

2. The photographic paper with the perfume for the thermal sublimation printer according to claim 1, wherein the second substrate (12) is paper, synthesized Mylar, biaxial oriented polypropylene (BOPP), polyethylene terephthalate (PET) or a combination thereof.

3. The photographic paper with the perfume for the thermal sublimation printer according to claim 1 or 2, wherein the second substrate (12) is white.

4. The photographic paper with the perfume for the thermal sublimation printer according to any one of the claims 1 to 3, wherein at least one of the first substrate (11) and the second substrate (12) is paper.

5. The photographic paper with the perfume for the thermal sublimation printer according to any one of the claims 1 to 4, wherein an amount of perfume of the perfume-containing adhesive layer (21) is greater than or equal to 2 wt% based on the weight of the perfume-containing adhesive layer (21).

6. The photographic paper with the perfume for the thermal sublimation printer according to any one of the claims 1 to 5, wherein the reflective layer (32) comprises metal oxide particles and a resin.

7. The photographic paper with the perfume for the thermal sublimation printer according to any one of the claims 1 to 6, further comprising:
a laminate (41) beneath the first substrate (11); and
a supporting layer (51) beneath the laminate (41).

8. The photographic paper with the perfume for the thermal sublimation printer according to claim 7, further comprising:
a first adhesive layer (22) between the laminate (41) and the supporting layer (51) and in contact with the laminate (41);
a label layer (61) between the laminate (41) and the supporting layer (51) and in contact with the supporting layer (51); and
a writable layer (71) beneath the supporting layer (51).

9. The photographic paper with the perfume for the thermal sublimation printer according to claim 8, further comprising:
a second adhesive layer (23) between the first substrate (11) and the laminate (41) and in contact with the first substrate (11); and
a third substrate (13) between the first substrate (11) and the laminate (41) and in contact with the laminate (41).

10. A method of manufacturing a photographic paper with perfume for a thermal sublimation printer, the method comprising:
providing a first substrate (11);
providing a second substrate (12) over the first substrate (11), the second substrate (12) having an upper surface and a lower surface opposite to each other;
forming a perfume-containing adhesive layer (21) in contact with the lower surface of the second substrate (12) to form a first stacked structure;
adhering the first stacked structure to the first substrate (11), such that the perfume-containing adhesive layer (21) is between the first substrate (11) and the second substrate (12); and
forming a dye-receiving layer (31) over the upper surface of the second substrate (12);
**characterized in that** the method further comprising forming a reflective layer (32) over the second substrate (12) before forming the dye-receiving layer (31) over the upper surface of the second substrate (12).

11. The method of manufacturing the photographic paper with the perfume for the thermal sublimation printer according to claim 10,
further comprising:
forming a laminate (41) beneath the first substrate (11) to form a second stacked structure after providing the first substrate (11).

12. The method of manufacturing the photographic paper with the perfume for the thermal sublimation printer according to claim 11,
further comprising:
providing a third stacked structure, the third stacked structure comprising a supporting layer (51) and a first adhesive layer (22) over the supporting layer (51); and
adhering the third stacked structure to the laminate (41) of the second stacked structure, such that the first adhesive layer (22) is between the laminate (41) and the supporting layer (51), before or after adhering the first stacked structure to the first substrate (11).

13. The method of manufacturing the photographic paper with the perfume for the thermal sublimation printer according to claim 12, wherein the third stacked structure further comprises a label layer (61) between the supporting layer (51) and the first adhesive layer (22).

14. The method of manufacturing the photographic paper with the perfume for the thermal sublimation printer according to claim 12,
further comprising:
forming a writable layer (71) beneath the supporting layer (51) of the third stacked structure.

## Patentansprüche

1. Ein fotografisches Papier mit Parfüm für einen Thermosublimationsdrucker, umfassend:
ein erstes Substrat (11);
ein zweites Substrat (12) über dem ersten Substrat (11);
eine parfümhaltige Haftschicht (21), die zwischen dem ersten Substrat (11) und dem zweiten Substrat (12) eingefügt ist, und
eine Farbstoff aufnehmende Schicht (31) über dem zweiten Substrat (12),
dadurch charakterisiert, dass
das fotografische Papier außerdem eine reflektierende Schicht (32) umfasst, die zwischen dem zweiten Substrat (12) und der Farbstoff aufnehmenden Schicht (31) eingefügt ist.

2. Das fotografische Papier mit dem Parfüm für den Thermosublimationsdrucker gemäß Anspruch 1, wobei das zweite Substrat (12) Papier, synthetisches Mylar, biaxial orientiertes Polypropylen (BOPP), Polyethylenterephthalat (PET) oder eine Kombination davon ist.

3. Das fotografische Papier mit dem Parfüm für den Thermosublimationsdrucker gemäß Anspruch 1 oder 2, wobei das zweite Substrat (12) weiß ist.

4. Das fotografische Papier mit dem Parfüm für den Thermosublimationsdrucker gemäß einem der Ansprüche 1 bis 3, wobei wenigstens eines des ersten Substrats (11) und des zweiten Substrats (12) Papier ist.

5. Das fotografische Papier mit dem Parfüm für den Thermosublimationsdrucker gemäß einem der Ansprüche 1 bis 4, wobei eine Menge an Parfüm der parfümhaltigen Haftschicht (21) größer als oder gleich 2 Gew.-% ist, bezogen auf das Gewicht der parfümhaltigen Haftschicht (21).

6. Das fotografische Papier mit dem Parfüm für den Thermosublimationsdrucker gemäß einem der Ansprüche 1 bis 5, wobei die reflektierende Schicht (32) Metalloxidpartikel und ein Harz enthält.

7. Das fotografische Papier mit dem Parfüm für den Thermosublimationsdrucker gemäß einem der Ansprüche 1 bis 6, außerdem umfassend:
ein Laminat (41) unterhalb des ersten Substrats (11) und
eine Trägerschicht (51) unterhalb des Laminats (41).

8. Das fotografische Papier mit dem Parfüm für den Thermosublimationsdrucker gemäß Anspruch 7, außerdem umfassend:
eine erste Haftschicht (22) zwischen dem Laminat (41) und der Trägerschicht (51) und in Kontakt mit dem Laminat (41);
eine Markierungsschicht (61) zwischen dem Laminat (41) und der Trägerschicht (51) und in Kontakt mit der Trägerschicht (51) und
eine beschreibbare Schicht (71) unterhalb der Trägerschicht (51).

9. Das fotografische Papier mit dem Parfüm für den Thermosublimationsdrucker gemäß Anspruch 8, außerdem umfassend:
eine zweite Haftschicht (23) zwischen dem ersten Substrat (11) und dem Laminat (41) und in Kontakt mit dem ersten Substrat (11) und
ein drittes Substrat (13) zwischen dem ersten Substrat (11) und dem Laminat (41) und in Kontakt mit dem Laminat (41).

10. Ein Verfahren zur Herstellung eines fotografischen Papiers mit Parfüm für einen Thermosublimationsdrucker, wobei das Verfahren umfasst:
Bereitstellen eines ersten Substrats (11);
Bereitstellen eines zweiten Substrats (12) über dem ersten Substrat (11), wobei das zweite Substrat (12) eine obere Oberfläche und eine untere Oberfläche aufweist, die einander gegenüberliegen;
Ausbilden einer parfümhaltigen Haftschicht (21) in Kontakt mit der unteren Oberfläche des zweiten Substrats (12), um eine erste geschichtete Struktur auszubilden;
Anhaften der ersten geschichteten Struktur an das erste Substrat (11), so dass die parfümhaltige Haftschicht (21) zwischen dem ersten Substrat (11) und dem zweiten Substrat (12) liegt, und
Ausbilden einer Farbstoff aufnehmenden Schicht (31) über der oberen Oberfläche des zweiten Substrats (12),
dadurch charakterisiert, dass
das Verfahren außerdem das Ausbilden einer reflektierenden Schicht (32) über dem zweiten Substrat (12) vor dem Ausbilden der Farbstoff aufnehmenden Schicht (31) über der oberen Oberfläche des zweiten Substrats (12) umfasst.

11. Das Verfahren zur Herstellung des fotografischen Papiers mit dem Parfüm für den Thermosublimationsdrucker gemäß Anspruch 10, außerdem umfassend:
Ausbilden eines Laminats (41) unterhalb des ersten Substrats (11), um eine zweite geschichtete Struktur nach dem Bereitstellen des ersten Substrats (11) auszubilden.

12. Das Verfahren zur Herstellung des fotografischen Papiers mit dem Parfüm für den Thermosublimationsdrucker gemäß Anspruch 11, außerdem umfassend:
Bereitstellen einer dritten geschichteten Struktur, wobei die dritte geschichtete Struktur eine Trägerschicht (51) und eine ersten Haftschicht (22) über der Trägerschicht (51) umfasst, und
Anhaften der dritten geschichteten Struktur an das Laminat (41) der zweiten geschichteten Struktur, so dass die erste Haftschicht (22) zwischen dem Laminat (41) und der Trägerschicht (51) liegt, bevor oder nachdem die erste geschichtete Struktur an das erste Substrat (11) angebracht wird/wurde.

13. Das Verfahren zur Herstellung des fotografischen Papiers mit dem Parfüm für den Thermosublimationsdrucker gemäß Anspruch 12, wobei die dritte geschichtete Struktur außerdem eine Markierungsschicht (61) zwischen der Trägerschicht (51) und der ersten Haftschicht (22) umfasst.

14. Das Verfahren zur Herstellung des fotografischen Papiers mit dem Parfüm für den Thermosublimationsdrucker gemäß Anspruch 12, außerdem umfassend:
Ausbilden einer beschreibbaren Schicht (71) unterhalb der Trägerschicht (51) der dritten geschichteten Struktur.

## Revendications

1. Papier photographique avec du parfum pour une imprimante à sublimation thermique, comprenant :
un premier substrat (11) ;
un deuxième substrat (12) au-dessus du premier substrat (11) ;
une couche adhésive contenant du parfum (21) interposée entre le premier substrat (11) et le deuxième substrat (12) ; et
une couche réceptrice de colorant (31) au-dessus du deuxième substrat (12) ;
**caractérisé en ce que** le papier photographique comprend en outre une couche réfléchissante (32) interposée entre le deuxième substrat (12) et la couche réceptrice de colorant (31).

2. Papier photographique avec du parfum pour une imprimante à sublimation thermique selon la revendication 1, dans lequel le deuxième substrat (12) est du papier, du Mylar synthétique, du polypropylène à orientation biaxiale (BOPP), du poly(téréphtalate d'éthylène) (PET) ou une combinaison de ceux-ci.

3. Papier photographique avec du parfum pour une imprimante à sublimation thermique selon la revendication 1 ou 2, dans lequel le deuxième substrat (12) est blanc.

4. Papier photographique avec du parfum pour une imprimante à sublimation thermique selon l'une quelconque des revendications 1 à 3, dans lequel au moins l'un parmi le premier substrat (11) et le deuxième substrat (12) est du papier.

5. Papier photographique avec du parfum pour une imprimante à sublimation thermique selon l'une quelconque des revendications 1 à 4, dans lequel la quantité de parfum de la couche adhésive contenant du parfum (21) est supérieure ou égale à 2 % en poids par rapport au poids de la couche adhésive contenant du parfum (21).

6. Papier photographique avec du parfum pour une imprimante à sublimation thermique selon l'une quelconque des revendications 1 à 5, dans lequel la couche réfléchissante (32) comprend des particules d'oxyde métallique et une résine.

7. Papier photographique avec du parfum pour une imprimante à sublimation thermique selon l'une quelconque des revendications 1 à 6, comprenant en outre :
un stratifié (41) sous le premier substrat (11) ; et
une couche de support (51) sous le stratifié (41).

8. Papier photographique avec du parfum pour une imprimante à sublimation thermique selon la revendication 7, comprenant en outre :
une première couche adhésive (22) entre le stratifié (41) et la couche de support (51) et en contact avec le stratifié (41) ;
une couche d'étiquette (61) entre le stratifié (41) et la couche de support (51) et en contact avec la couche de support (51) ; et
une couche inscriptible (71) sous la couche de support (51).

9. Papier photographique avec du parfum pour une imprimante à sublimation thermique selon la revendication 8, comprenant en outre :
une deuxième couche adhésive (23) entre le premier substrat (11) et le stratifié (41) et en contact avec le premier substrat (11) ; et
un troisième substrat (13) entre le premier substrat (11) et le stratifié (41) et en contact avec le stratifié (41).

10. Procédé pour fabriquer un papier photographique avec du parfum pour une imprimante à sublimation thermique, lequel procédé comprend les opérations consistant à :
disposer d'un premier substrat (11) ;
disposer un deuxième substrat (12) au-dessus du premier substrat (11), le deuxième substrat (12) ayant une surface supérieure et une surface inférieure mutuellement opposées ;
former une couche adhésive contenant du parfum (21) en contact avec la surface inférieure du deuxième substrat (12) pour former une première structure empilée ;
faire adhérer la première structure empilée au premier substrat (11), de façon que la couche adhésive contenant du parfum (21) soit entre le premier substrat (11) et le deuxième substrat (12) ; ; et
former une couche de réception de colorant (31) au-dessus de la surface supérieure du deuxième substrat (12) ;
**caractérisé en ce que** le procédé comprend en outre la formation d'une couche réfléchissante (32) au-dessus du deuxième substrat (12) avant la formation de la couche réceptrice de colorant (31) au-dessus de la surface supérieure du deuxième substrat (12).

11. Procédé pour fabriquer un papier photographique avec du parfum pour une imprimante à sublimation thermique selon la revendication 10, comprenant en outre l'opération consistant à
former un stratifié (41) sous le premier substrat (11) pour former une deuxième structure empilée après la disposition du premier substrat (11).

12. Procédé pour fabriquer un papier photographique avec du parfum pour une imprimante à sublimation thermique selon la revendication 11, comprenant en outre les opérations consistant à :
disposer d'une troisième structure empilée, la troisième structure empilée comprenant une couche de support (51) et une premier couche adhésive (22) au-dessus de la couche de support (51) ; et
faire adhérer la troisième structure empilée au stratifié (41) de la deuxième structure empilée, de façon que la première couche adhésive (22) soit entre le stratifié (41) et la couche de support (51), avant ou après l'adhérence de la première structure empilée au premier substrat (11).

13. Procédé pour fabriquer un papier photographique avec du parfum pour une imprimante à sublimation thermique selon la revendication 12, dans lequel la troisième structure empilée comprend en outre une couche d'étiquette (61) entre la couche de support (51) et la première couche adhésive (22).

14. Procédé pour fabriquer un papier photographique avec du parfum pour une imprimante à sublimation thermique selon la revendication 12, comprenant en outre l'opération consistant à
former une couche inscriptible (71) sous la couche de support (51) de la troisième structure empilée.
